**Europäisches Patentamt**

**European Patent Office**

**Office européen des brevets**

(19)

(11) Publication number : **0 394 232 B1**

(12)

# EUROPEAN PATENT SPECIFICATION

(45) Date of publication of patent specification :
30.09.92 Bulletin 92/40

(51) Int. Cl.$^5$ : **C02F 1/46**

(21) Application number : **88903607.5**

(22) Date of filing : **15.03.88**

(86) International application number :
**PCT/US88/00916**

(87) International publication number :
**WO 88/09772 15.12.88 Gazette 88/27**

(54) SYSTEM FOR ELECTROLYTIC TREATMENT OF LIQUID.

The file contains technical information
submitted after the application was filed and
not included in this specification

(30) Priority : **09.06.87 US 59998**
**17.07.87 US 74680**
**30.09.87 US 102681**

(43) Date of publication of application :
**31.10.90 Bulletin 90/44**

(45) Publication of the grant of the patent :
**30.09.92 Bulletin 92/40**

(84) Designated Contracting States :
**AT BE CH DE FR GB IT LI LU NL SE**

(56) References cited :
**DE-A- 2 948 462**
**US-A- 4 125 445**
**US-A- 4 293 400**
**US-A- 4 378 276**

(73) Proprietor : **CLEAN UP AND RECOVERY
CORPORATION**
**2530 S. Parker Road Suite 400 Waterpark
Complex**
**Aurora, CO 80014 (US)**

(72) Inventor : **HERBST, Robert, J.**
**6315 Windfield Avenue**
**Parker, CO 80134 (US)**
Inventor : **RENK, Russell, R.**
**703 University Avenue**
**Laramie, WY 82070 (US)**

(74) Representative : **Sherrard-Smith, Hugh et al
Appleyard, Lees & Co. 15 Clare Road
Halifax, HX1 2HY West Yorkshire (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## EP 0 394 232 B1

## Description

This invention relates to the electrolytic treatment of liquids and, more particularly, this invention relates to an improved system for electrolytically treating aqueous solutions by causing dissolved solids to precipitate out of the solution.

In a prior art system, aqueous solution containing dissolved solids passes through the cathode tubes without any provisions for maximizing liquid contact with the internal surface of the cathode tubes. Further, a plurality of anode and cathode tubes are needed in most cases for effective electrolytic treatment. This drastically increases the cost of treatment, especially for anion and cation removal. Structural features which further decrease the efficiency and increase the cost of the electrolytic treatment apparatus of the prior art include the length of housing from which the outlet extends and the inlet manifold which do not contribute to the actual removal of dissolved anions and cations from the anode and cathode tubes.

In US Patent No 4,293,400 (Liggett) there is disclosed apparatus for the electrolytic treatment of water, in which a plurality of cylindrical tubular anodes each have a corresponding cylindrical cathode passing concentrically therethrough and separated from the anode by a helical spacer. The water passes through a void between the anodes and cathode along the spacer. A plurality of such anodes are enclosed in a cylindrical plastic housing which collects the water after electrical treatment, and feeds a filter or settling tank.

In US 4,378,276 (Liggett) which is a divisional Patent of the above US Patent, there is described a method of purifying water in accordance with the apparatus disclosed in US 4,293,400, and the same geometric limitations are present in each disclosure.

## Summary of the invention

According to a first aspect of the present invention, there is provided an electrolytic treatment apparatus for liquids having a voltage source and a housing with inlet and outlet portions; characterised in that said housing encloses inner and outer tubes; inner and outer insulators; and a centrally elongated member; said inner insulator wraps around said centrally located elongated member; said inner tube encloses said inner insulator; said outer insulator wraps around said inner tube; said outer tube encloses said outer insulator; and said voltage source connects a terminal to said centrally located elongated member and said outer tube, and connects another terminal to said inner tube.

According to a second aspect of the present invention there is provided a method of purifying aqueous solutions having a centrally elongated member, an inner insulator which is wrapped around said centrally located elongated member; an inner tube which encloses said inner insulator; an outer insulator which is wrapped around said inner tube; an outer tube which encloses said outer insulator; a housing having inlet and outlet portions; and a voltage source having terminals; characterised in that said method passes said aqueous solution along said inner insulator so that said aqueous solution is in contact with said centrally located elongated member and said inner tube; passes said aqueous solution along said outer insulator so that said aqueous solution is in contact with said inner tube and said outer tube; connects a terminal of said voltage source to said centrally elongated member and said outer tube; connects another terminal of said voltage source to said inner tube, and said voltage source applies a voltage across said centrally elongated member, and said inner and outer tubes with said voltage source to thereby remove suspended materials and dissolved solids from said aqueous solution.

The instant invention maximizes liquid contact with the anode and cathode metal surfaces, as well as minimizes the number of treatment tubes required for a much improved efficiency. Also, the instant invention minimizes the required power for efficient operation and allows the solution to travel from one tube to another when exposed to sequential electrical fields of different directions. Also, the lives of the tubes are increased and the power supply from the DC voltage is decreased with the instant invention.

The system for electrolytic treatment of liquid of the present invention is used to efficiently remove impurities from aqueous solutions, especially dissolved anions and cations by passing the aqueous solution through a plurality of metallic rods or tubes, which act either as positive anodes or negative cathodes and thereafter applying a DC voltage either in one direction or in sequential fields of different directions across the plurality of metallic rods or tubes thereby effectively removing both suspended materials and dissolved solids from the aqueous solution. In one embodiment, the aqueous solution to be treated enters an inlet and passes along the inner non-conductive helical insulator or spacer and along the outer surface of the center anode or cathode rod and the inner surface of the inner cathode or anode tube. The aqueous solution is then directed along the outer non-conductive helical insulator or spacer and along the outer surface of the inner tube and the inner surface of the anode or cathode outer tube. The aqueous solution thereafter passes through the discharge port wherein separation of the solids from the liquids occur. In another, the center anode or cathode rod can be re-

2

placed with an innermost anode or cathode tube. In yet another embodiment, the innermost anode or cathode tube has a plurality of apertures for the aqueous solution to pass therethrough. The above-described tubes in any desired combination can have similar types of apertures. The combination of metallic rods and tubes are enclosed in a tube housing in order to preclude leakage.

The foregoing and other objects, features and advantages of this invention will be apparent from the following, more particular, description of the preferred embodiments of this invention, as illustrated in the accompanying drawings.

**BRIEF DESCRIPTION OF THE DRAWINGS**

Figure 1 is a cross-sectional view of the improved system for electrolytic treatment of liquid in accordance with the present invention having a center solid rod.

Figure 2 is a cross-sectional view taken along line 2-2 of Figure 1 showing the manner in which the rods and tubes are arranged for directing and treating an associated aqueous solution.

Figure 3 is another embodiment of the improved system for electrolytic treatment of liquid shown in cross-sectional view having a center tube.

Figure 4 is yet another embodiment of the improved system for electrolytic treatment of liquid shown in cross-sectional view having the center tube with a plurality of apertures passing therethrough.

Figure 5 is yet another embodiment of the improved system for electrolytic treatment of liquid illustrating the manner in which spacers and pole reversal switches are coupled at various locations of the plurality of tubes.

**DETAILED DESCRIPTION OF THE PREFERRED EMBODIMENTS**

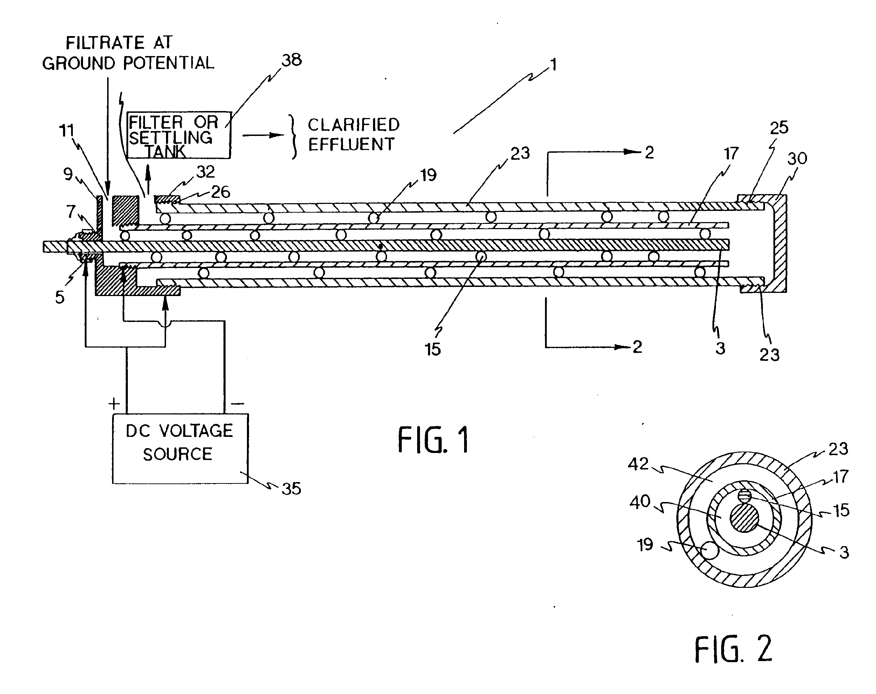

Attention is first directed to Figure 1 which shows an improved system for electrolytic treatment of liquid, generally referred by reference number 1. As shown in Figure 1, a centrally located rod 3 has at least one end 5 held by a mounting member 7. The mounting member 7 has an extending portion 9 which makes up a part of an inlet portion 11. Wrapped around the rod 3 is an inner helical insulator or spacer 15 which is preferably cylindrical in cross-section or a closed tube so as to be compressible capable of providing a good seal with electrode surfaces against which they are pressed. An inner metal tube 17 encloses the rod 3 and the insulator or spacer 15, as shown. An outer helical insulator or spacer 19 wraps around the inner metal tube 17. An outer metal tube 23 encloses the outer helical insulator or spacer 15. Both ends of the outer metal tube 23 have external threads 25, 26 for mating with the internal threads 28 of an end cap 30 and internal threads 32 provided for the mounting member 7. Also, the inner metal tube 17 is coupled to the mounting member 7 with mating threads as shown. A housing tube (not shown), preferably made of plastic, is placed over the outer metal tube 23.

The center rod 3 is preferably made of metal which acts as an anode, such as aluminum, or the like. The inner tube 17 is preferably made out of metal which acts as a cathode, while the outer tube 23 is preferably made out of metal which acts as an anode. It should however be clear that the metals used for the rod 3 and tubes 17, 23 are not limited to the above-described materials. The rod 3 and tubes 17, 23 can be constructed of different metals or composites of materials. Similarly, the center rod 3 and the outer tube 23 can act as the cathode, while the inner tube 17 can act as the anode. Alternatively, the center rod 3 can be the cathode, while the inner 17 and outer 23 tubes can be the anode. Also, the center rod can be the anode, while the inner 17 and outer 23 tubes can be the cathode. Another arrangement is to pair the center rod 3 and inner tube 17 as anodes and use the outer tube 23 as the cathode. Also, the center rod 3 and inner tube 17 can be paired as cathodes with the outer tube 23 as the anode.

A direct current voltage from a source 35 is applied across the center rod 3 and tubes 17, 23. For example, the positive terminal of the DC voltage source 35 is connected to the center rod 3 and outer tube 23 when acting as the anode by way of pins (not shown) mounted through the mounting member 7. A variable in-line resistor (not shown) can be used to apply different voltages across the rod 3 and the tubes 17, 23 if voltage is supplied from the same source. Moreover, if different lengths of metal tubes or rod are used, insulators or spacers 15, 19 can have different resistance values between the tube sections so as to attain different voltages applied across various sections along the rod 3 and tubes 17, 23.

When in use, aqueous solution enters inlet portion 11. The non-conductive insulators or spacers 15, 19 which are wrapped around the center rod 3 and the inner tube 17, respectively, do not provide any gaps between it and the rod 3 and the surfaces of the tubes 17, 23. Thus, the aqueous solution winds along the helical passageways 40, 42 (shown in Figure 2) provided by the insulators or spacers 15, 19 thereby maximizing the liquid contact with the metal surfaces of the rod 3 and tubes 17, 23. A discharge portion 36 is provided for discharging the treated liquid. The solids in the treated solution are separated from the liquid with a filter or by retaining them for a period of time in a settling tank or basin 38. The negative and positive poles of the System 1 can be periodically reversed, either mechanically or automatically, so as to aid in the cleaning of the cathode portion as will later be described.

The System 1 just described significantly improves the efficiency of the electrocoagulation process since direct current causes the negative and positive elements towards each other. Further more liquid contact to the metals is achieved thereby further improving the efficiency of the treating process. Still further, a strong, quick settling, low volume floc is generated. Also, less aluminum hydroxide floc is formed when compared with the conventional adding of aluminum to waste water, thus less floc is required to be disposed of. Other divalent and trivalent metal ions (e.g., nickel) are removed in the process since the positive ions are directed by the electrical current into the negative hydroxide ions. The formation of metal hydroxide sludge (e.g., iron hydroxide) is advantageous in that the metal hydroxide sludge or precipitate is not hazardous per se. Thus, the final form of the sludge or precipitate is suitable for dumping or storage.

In addition to the formation of metal hydroxide sludge, the electrocoagulation system 1 of the instant invention has been observed to form metal oxides and complex metal oxide sludge or precipitate. The just-mentioned metal oxides are stable in acid solutions. Thus, the formation of sludge or precipitate in the form of metal oxides or complex metal oxides is also advantageous in that they can be safely dumped or stored. Oxides of this type can, for example, be of iron, nickel, aluminum, chromium, or the like.

It has been observed that, for instance, a solution containing nickel at 11.2 mg/L has been treated using an iron anode and cathode at 20 amperes and 23 volts. The solution (supernatant) had a nickel concentration of 1.47 mg/L. The formed sludge or precipitate after treatment contained an iron-nickel-oxide having 3.1% nickel on a dry weight basis.

A complexing agent had also been added to the solution prior to undergoing an electrocoagulation process. However, the complexing agent without electrocoagulation was observed to only lower the nickel level to 3.8 mg/L. It was further observed that solutions having undergone an electrocoagulation process without the use of a complexing agent had a nickel level of 1.45 mg/L.

Organic compounds can be directly destroyed at the anode. When oxygen is present in the aqueous solution, ozone, for example, which forms at the anode can react with and destroy organic compounds in the solution. Hydrogen gas bubbles can form at the cathode which float the formed waste floc to the surface of the solution where they can be skimmed off.

As described above and illustrated in Figure 1, the System 1 is economical since it requires only one cathode tube and requires less power for effective operation. For example, given the following structural parameters:

- an iron rod with about 6.35 mm diameter
- about a 6.35 mm thick iron inner tube with about a 19.05 mm inside diameter
- an aluminum outer tube with about a 38.10 mm inner diameter,

the conductivity of the aqueous solution or waste water was found to be 500 micro mhos per centimeter and the treatment process required 120 watts of power. Further, the treatment process removes 8.30 micro mhos of conductivity per watt of power. When the central rod was removed, 5.50 micro mhos per centimeter of conductivity per watt of power was removed and the conductivity was lowered only to 1000 micro mhos per centimeter.

When the same solution was treated with just the center rod removed and then treated again with the center rod removed and the outer tube replaced with about a 38.10 mm inside diameter iron tube, the solution which was twice treated, had a conductivity of 600 micro mhos per centimeter and 4.70 micro mhos of conductivity per watt of power was removed. Thus, the above-described system in Figure 1 removes more salts from the water, as measured in terms of conductivity, as well as required only about 40% of energy per amount of salt removed.

Also, sequential electric fields of different directions can be applied to the solution resulting in a much improved efficiency. For example, efficiency can be increased by reversing the anodes and cathodes; i.e., having the center rod 3 and the outer tube serve as cathodes while the inner tube 17 serves as the anode.

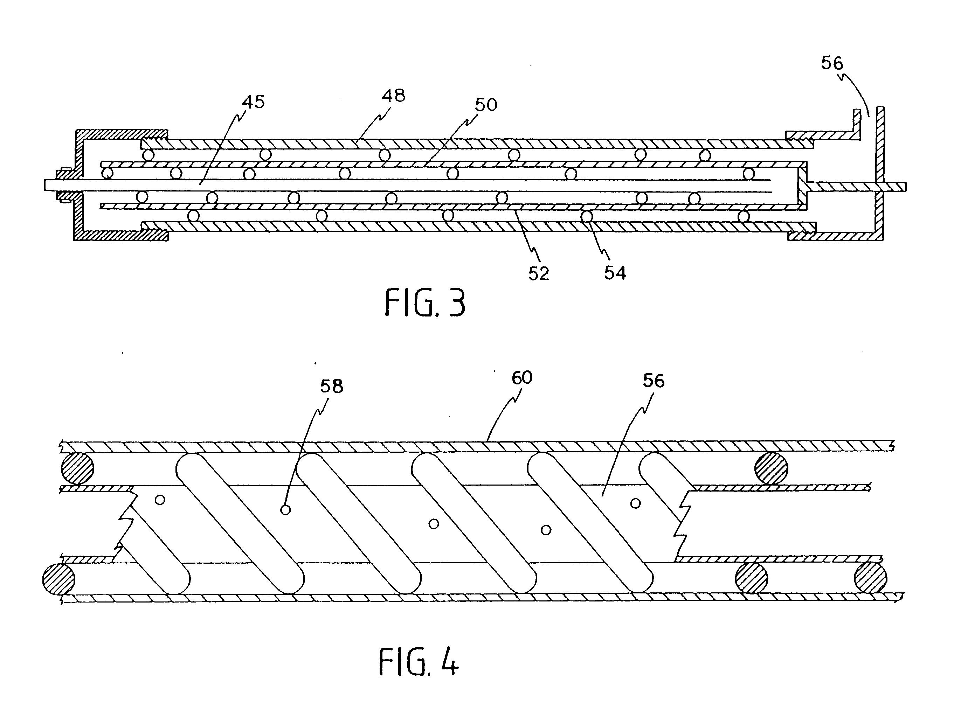

As shown in Figure 3, the aqueous solution can be initially exposed to the cathode by having the center rod 3 in Figures 1 and 2 replaced with an innermost tube 45 having a material which acts as a cathode. The outer tube 48 similarly acts as a cathode, while the inner tube 50 acts as the anode. Other combinations can be provided, such as having the innermost tube 45 act as the cathode while the outer 48 and inner 50 tubes act as the anodes. Also, the innermost tube 45 can be the anode, while the inner 50 and outer 48 tubes can be the cathode. Another arrangement is to pair the innermost tube 45 and inner tube 50 as anodes and use the outer tube 48 as the cathode. Also, the innermost tube 45 and inner tube 50 can be paired as cathodes with the outer tube 48 as the anode.

In Figure 3, the aqueous solution enters the innermost tube 45 and passes through an inner helical insulator or spacer 52, as above described for Figure 1, within the inner tube 50. The solution then passes through an outer helical insulator or spacer 54 within the outer tube 48 and exits through outlet portion 56.

A metal rod (not shown) can be inserted inside the innermost tube 45 so that the system, illustrated in Figure 2, comprises at least three metal tubes 45, 48, 50 and the metal rod. Other arrangements are possible, including having four metal tubes, four metal tubes with a metal rod, five metal tubes, five metal tubes with a metal rod, or the like. As described for Figure 1, all the embodiments of the system illustrated in the figures can similarly have different combinations of arrangements for the anodes and cathodes, as well as different metals or composites of metals. The various rods and tubes may also vary in sizes and lengths.

In Figure 4, an innermost tube 56 can have a plurality of apertures 58 passing therethrough in order to allow varying amounts of solution to pass into the inner tube 60 which increases the electrocoagulation treatment of some solutions, especially when exposed to sequential electric fields of different directions.

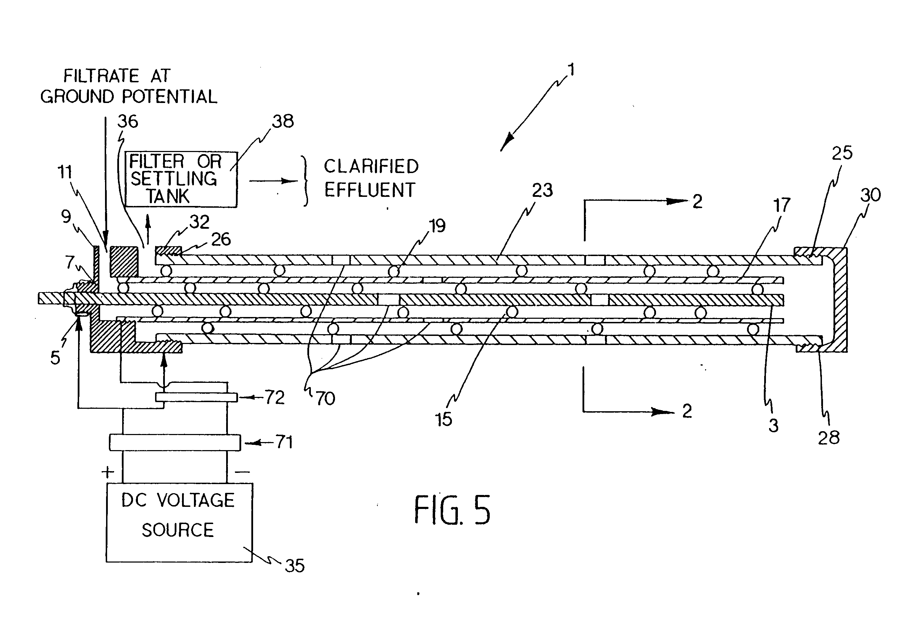

As shown in Figure 5, spacers 70 may be coupled to the center rod 3, and the inner 17 and outer 23 tubes. The spacers 70 can, for example, be in the form of rings or tubes having external or internal threaded ends for mating with internal or external threaded end portions (not shown) of the center rod, and the inner 17 and outer 23 tubes. The spacers 70 can, for example, be made of PVC, or semi-conductive material, or the like. The spacers 70, having different resistances are used for varying the voltages applied at various sections of the center rod 3, and the inner 17 and the outer 23 tubes when the System 1 is in use.

As further shown in Figure 5, pole reversal switches 71, 72 are alternatively coupled to the wires leading to the terminals of the DC voltage source 35. The pole reversal switches 71, 72 are, for example, of the types manufactured by Rapid Power Technologies, Inc. of Brookfield, Connecticut. The pole reversal switches 71, 72 are used to aid in the cleaning of the cathode by having the negative and positive poles of the System 1 periodically reversed.

The above-described electrolytic system can be improved by adding materials to the solution to be treated. Such materials include acids, bases, polymers, fly ashes, peat mosses, ozone, potassium permanganate, alum, iron chloride, iron hydroxide, calcium chloride, silica, magnesium salts, iron oxide, alumina, air, oxygen, or the like.

It has been observed that adding certain materials to a solution before undergoing electrocoagulation treatment increases the removal of impurities from the liquid. In essence, the added materials can change the nature of the sludge or precipitate formed by the electrocoagulation process. Moreover, the added materials can change the nature of the interacting impurities and the mechanism by which the impurities are removed.

In some instances, sludge formed by the electrocoagulation process can be acidified (e.g., by adding hydrochloric acid, or the like into the liquid or aqueous solution) thereby allowing the sludge to release metal ions which is introduced into the liquid or aqueous solution. The introduction of metal ions by the sludge effectively substitutes for the metal ions from the anode portion. Thus, the system can be operated at less current or voltage, thereby allowing the anode portion can have a prolonged life. The metal ions can also essentially remove impurities from the liquid or aqueous solution being treated.

If the sludge is recycled through the system, the sludge generally acts as a "seed" to form new or more dense sludge by the process of nucleation. Thus, the metal ions which are further produced by this process increase the efficiency of the system in its removal of impurities from the liquid or aqueous solution being treated. In essence, the added sludge acts as a nucleation site in the nucleation process.

Materials (such as, carbon, or the like) can be provided within the annular spacings (e.g., the hollow portion of the tubes) in order to increase the reactivity area and thus, the efficiency, of the System. The material to be used can, e.g., be carbon chips or balls. Examples of carbon chips or balls to be used include: Union Carbide electrolytic carbon; "PGH-BPL" (a bituminous base activated carbon provided by granules of 6 x 16 mesh) manufactured by Pittsburgh Activated Carbon Co. of Pittsburgh, Pennsylvania; "NUCHAR WV-W" (a coal based activated carbon) manufactured by West Virginia Paper and Pulp Co., West Virginia; and Witco-256 or Witco-337 manufactured by Witco Chemicals of New York City, New York.

In order to decrease the power supply from the DC voltage source across the tubes and to increase the lives of the various tubes, the tubes can be coated, sprayed, painted, dipped or wrapped with a treatment material. The treated tubes can then inhibit the particles directed toward the treated tube (acting either as an anode or a cathode) while the particles remain in the solution, and similarly induce the flow of particles from an untreated tube (acting either as a cathode or an anode, respectively). The treatment material can be epoxy (e.g., "COAL-TAR" epoxy) or polyurethane spray, latex dipping fluid, or any material thin enough to permit current density to pass through.

Since the treatment material tends to insulate the tube, the amperage per volt which passes through the liquid decreases since the particles emanating from the treated tube decreases. Thus, an operator can pass higher voltage and less amperage through the liquid.

In an untreated tube in an environment of low voltage and high amperage, the flocculation occurs due to the quantity of metallic ions in spite of the ionic velocities at lower rates. Under the influence of an applied electric field, ions tend to accelerate in a direction opposite to the electric field. Thus, the increase in voltage or applied electric field results in a net effect of more collisions in the liquid between pollutant particles, metallic ions and OH or hydroxyl ions which, in some instances, may provide better flocculation.

In a two-tube configuration having a treated inner cathode tube (i.e., the outer surface of the inner cathode tube being treated), the following results were observed:

| Tube Type | Voltage | Amperage | Power |
|---|---|---|---|
| Regular | 50 volts | 28 amps | 1400 watts |
| Treated | 150 volts | 3 amps | 450 watts |

Therefore, a treated tube can be a significant advantage in a conductive influent as power is decreased due to the lowering of amperage, thereby significantly increasing the tube life.

It has further been observed that in a treated "negative sight" or a cathode tube, hydrogen gas forms between the tube and the treatment material. However, in a treated "positive sight" or an anode tube, significant improvement in the deterioration rate of the tube has been observed.

**Claims**

1. An electrolytic treatment apparatus (1) for liquids having a voltage source (35) and a housing with inlet (11) and outlet (36) portions; characterised in that said housing encloses inner (17) and outer (23) tubes; inner (15) and outer (19) insulators; and a centrally elongated member (3); said inner insulator (15) wraps around said centrally located elongated member (3); said inner tube (17) encloses said inner insulator (15); said outer insulator wraps (19) around said inner tube (17); said outer tube (23) encloses said outer insulator (19); and said voltage source (35) connects a terminal to said centrally located elongated member (3) and said outer tube (23), and connects another terminal to said inner tube (17).

2. The electrolytic treatment apparatus (1) as defined in claim 1, characterised in that said centrally located member (3) is solid.

3. The electrolytic treatment apparatus (1) as defined in claim 1, characterised in that said centrally located member (3) is tubular.

4. The electrolytic treatment apparatus (1) as defined in claim 2, characterised in that said tubular centrally located member (3) has a plurality of apertures (58) passing therethrough.

5. The electrolytic treatment apparatus (1) as defined in claim 1, characterised in that said centrally located member (3) and said outer tube (23) are made of materials which act as anodes, and wherein said inner tube (17) is made of a material which acts as a cathode.

6. The electrolytic treatment apparatus (1) as defined in claim 1, characterised in that said centrally located member (3) and said outer tube (23) are made of materials which act as cathodes, and wherein said inner tube (17) is made of material which act as an anode.

7. The electrolytic treatment apparatus (1) as defined in claim 1, characterised in that said centrally located member (3) is made of a material which acts as a cathode, and said inner (17) and outer (23) tubes are made of materials which act as anodes.

8. The electrolytic treatment apparatus (1) as defined in claim 1, characterised in that said centrally located member (3) is made of a material which acts as an anode, and said inner (17) and outer (23) tubes are made of materials which act as cathodes.

9. The electrolytic treatment apparatus (1) as defined in claim 1, characterised in that said centrally located member (3) and said inner tube (17) are made of materials which act as anodes, and wherein said outer tube (23) is made of a material which acts as a cathode.

10. The electrolytic treatment apparatus (1) as defined in claim 1, characterised in that said centrally located member (3) and said inner tube (17) are made of materials which act as cathodes, and said outer tube (23) is made of a material which act as an anode.

11. The electrolytic treatment apparatus (1) as defined in claim 1, characterised in that said centrally located elongated member (3) and said inner (17) and outer (23) tubes have spacers (70) having different resistances for varying the voltage drops thereacross.

12. The electrolytic treatment apparatus (1) as defined in claim 1, characterised in that said voltage source (3) has a pole reversal switches (71, 72) which periodically reverses the polarity of said centrally located elongated member (3) and said inner (17) and outer (23) tubes.

13. The electrolytic treatment apparatus (1) as in claim 1, characterised in that substances are within said elongated member (3) and said inner (17) and outer (23) tubes for increasing the reactivity area thereof.

14. The electrolytic treatment apparatus (1) as defined in claim 1 containing said liquids, characterised by having substances added to said liquids for increasing metal ion concentration in order to increase the efficiency of said electrolytic treatment apparatus (1).

15. The electrolytic treatment apparatus (1) as defined in claim 1, characterised in that the centrally located elongated member (3) includes a treatment material.

16. The electrolytic treatment apparatus (1) as defined in claim 1, characterised in that the inner tube (17) includes a treatment material.

17. The electrolytic treatment apparatus (1) as defined in claim 1, characterised in that the outer tube (23) includes a treatment material.

18. The electrolytic treatment apparatus (1) as defined in claim 1 containing said liquids, characterised by having at least one substance added to said liquids for changing the nature of the sludge or precipitate formed.

19. The electrolytic treatment apparatus (1) as defined in claim 1 containing said liquids, characterised by having at least one substance added to said liquids for improving removal of impurities from said liquids.

20. The electrolytic treatment apparatus (1) as defined in claim 1 containing said liquids, characterised by having at least one substance added to said liquids for forming non-hazardous sludge or precipitate.

21. A method of purifying aqueous solutions 14 an apparatus having a centrally elongated member (3); an inner insulator (15) which is wrapped around said centrally located elongated member (3); an inner tube (17) which encloses said inner insulator (15); an outer insulator (19) which is wrapped around said inner tube (17); an outer tube (23) which encloses said outer insulator (19); a housing having inlet (11) and outlet (36) portions; and a voltage source (35) having terminals; characterised in that said method passes said aqueous solution along said inner insulator (15) so that said aqueous solution is in contact with said centrally located elongated member (3) and said inner tube (17); passes said aqueous solution along said outer insulator (19) so that said aqueous solution is in contact with said inner tube (17) and said outer tube (23); connects a terminal of said voltage source (35) to said centrally elongated member (3) and said outer tube (23); connects another terminal of said voltage source (35) to said inner tube (17), and said voltage source (35) applies a voltage across said centrally elongated member (3), and said inner (17) and outer (23) tubes with said voltage source (35) to thereby remove suspended materials and dissolved solids from said aqueous solution.

22. The method of purifying aqueous solutions as defined in claim 21, characterised in that said centrally located elongated member (3) and said outer tube (23) are made of metals which act as anodes,. and said inner tube (17) is made of a metal which acts as a cathode.

23. The method of purifying aqueous solutions as defined in claim 21, characterised in that said centrally located elongated member (3) and said outer tube (23) are made of metals which act as cathodes, and said inner tube (17) is made of a metal which acts as an anode.

24. The method of purifying aqueous solutions as defined in claim 21, characterised in that said centrally

7

located elongated member (3) is a solid rod.

25. The method of purifying aqueous solutions as defined in claim 21, characterised in that said centrally located elongated member (3) is an innermost tube.

26. The method of purifying aqueous solutions as defined in claim 21, characterised in that the voltage supplied by said voltage source (35) varies.

27. The method of purifying aqueous solutions as defined in claim 21, characterised in that the polarity across the terminals of said voltage source (35) is reversible.

28. The method of purifying aqueous solutions as defined in claim 21, characterised in that sludge formed from said aqueous solutions is recycled.

29. The method of purifying aqueous solutions as defined in claim 28, characterised in that nucleation seed is introduced into said aqueous solutions in recycling said sludge.

30. The method of purifying aqueous solutions as defined in claim 21, characterised by passing said aqueous solutions past materials provided within said inner (17) and outer (23) tubes such that a reactivity area of said tubes is effectively increased.

31. The method of purifying aqueous solutions as defined in claim 21, characterised in that at least one substance is added to said aqueous solutions for increasing metal ion concentration for improving the removal of impurities from said aqueous solutions.

32. The method of purifying aqueous solutions as in claim 21, characterised in that said centrally located elongated member (3) is a solid rod which includes a treatment material.

33. The method of purifying aqueous solutions as defined in claim 21, characterised in that said centrally located elongated member (3) is an innermost tube which includes a treatment material.

34. The method of purifying aqueous solutions as defined in claim 21, characterised in that said inner tube includes a treatment material.

35. The method of purifying aqueous solutions as defined in claim 21, characterised in that at least one substance is added to said aqueous solutions, said substance(s) selected for changing electrical characteristics, acidity, physical density, formation or nucleation, or release of ions of the sludge or precipitate formed.

36. The method of purifying aqueous solutions as defined in claim 21, characterised in that at least one substance selected for improving removal of impurities from said liquids is added to said aqueous solutions.

37. The method of purifying aqueous solutions as defined in claim 21, characterised in that at least one substance is added to said aqueous solutions said substance(s) selected for forming non-hazardous sludge or precipitate.

38. The method of purifying aqueous solutions as defined in claim 21, characterised in that at least one substance selected from the following group is added to said aqueous solutions: acids; bases; polymers; fly ashes; peat mosses; ozone; potassium permangonate; alum; iron chloride; iron hydroxide; calcium chloride; silica; magnesium salts; iron oxide; alumina; air; oxygen.

## Patentansprüche

1: Vorrichtung zur elektrolytischen Behandlung (1) von Flüssigkeiten, welche eine Spannungsquelle (35) und ein Gehäuse mit einem Eingangs- (11) und einem Ausgangsteil (36) aufweist, **dadurch gekennzeichnet daß** das genannte Gehäuse innere (17) and äußere (23) Rohre umgibt, innere (15) und äußere (19) Isolatoren und ein zentrales langgestrecktes Element (3); daß der genannte innere Isolator (15) um das zentral angeordnete langgestreckte Element (3) herumgewickelt ist; daß das genannte innere Rohr (17) den genannten inneren Isolator (15) einschließt; daß der genannte äußere Isolator (19) um das genannte innere Rohr (17) herumgewickelt ist; daß das genannte äußere Rohr (23) den genannten äußeren Isolator (19) umgibt; und daß die genannte Spannungsquelle (35) mit einer Klemme mit dem genannten zentral angeordneten langgestreckten Element (3) und dem genannten äußeren Rohr (23) verbunden ist, und daß die andere Klemme mit dem genannten inneren Rohr (17) verbunden ist.

2: Vorrichtung zur elektrolytischen Behandlung (1) nach Anspruch 1, **dadurch gekennzeichnet daß** das genannte zentral angeordnete Element (3) massiv ist.

3: Vorrichtung zur elektrolytischen Behandlung (1) nach Anpruch 1, **dadurch gekennzeichnet daß** das genannte zentral angeordnete Element (3) rohrförmig ist.

4: Vorrichtung zur elektrolytischen Behandlung (1) nach Anspruch 2, **dadurch gekennzeichnet daß** das genannte rohrförmige zentral angeordnete Element (3) eine Vielzahl von Öffnungen (58) aufweist, welche durch dieses hindurchgehen.

5: Vorrichtung zur elektrolytischen Behandlung (1) nach Anspruch 1, **dadurch gekennzeichnet daß** das genannte zentral angeordnete Element (3) und das genannte äußere Rohr (23) aus Materialien hergestellt sind, welche als Anode wirken, and daß das genannte innere Rohr (17) aus einem Material hergestellt ist, welches als Kathode wirkt.

6: Vorrichtung zur elektrolytischen Behandlung (1) nach Anspruch 1, **dadurch gekennzeichnet daß** das genannte zentral angeordnete Element (3) und das genannte äußere Rohr (23) aus Materialien hergestellt sind, welche als Kathode wirken, and daß das genannte innere Rohr (27) aus einem Material hergestellt ist, welches als Anode wirkt.

7: Vorrichtung zur elektrolytischen Behandlung (1) nach Anspruch 1, **dadurch gekennzeichnet daß** das genannte zentral angeordnete Element (3) aus einem Material hergstellt ist, welches als Kathode wirkt, und daß die genannten inneren (17) und äußeren (23) Rohre aus Materialien hergestellt sind, welche als Anode wirken.

8: Vorrichtung zur elektrolytischen Behandlung (1) nach Anspruch 1, **dadurch gekennzeichnet daß** das genannte zentral angeordnete Element (3) aus einem Material hergestellt ist, welches als Anode wirkt, und daß die genannten inneren (17) und äußeren (23) Rohre aus Materialien hergestellt sind, welche als Kathode wirken.

9: Vorrichtung zur elektrolytischen Behandlung (1) nach Anspruch 1, **dadurch gekennzeichnet daß** das genannte zentral angeordnete Element (3) und das genannte innere Rohr (17) aus Materialien hergestellt sind, welche als Anode wirken, und daß das genannte äußere Rohr (23) aus einem Material hergestellt ist, welches als Kathode wirkt.

10: Vorrichtung zur elektrolytischen Behandlung (1) nach Anspruch 1, **dadurch gekennzeichnet daß** das genannte zentral angeordnete Element (3) und das genannte innere Rohr (17) aus Materialien hergestellt sind, welche als Kathode wirken, and daß das genannte äußere Rohr (23) aus einem Material hergestellt ist, welches als Anode wirkt.

11: Vorrichtung zur elektrolytischen Behandlung (1) nach Anspruch 1, **dadurch gekennzeichnet daß** das genannte zentral angeordnete Element (3) und das genannte innere (17) und das äußere (23) Rohr Abstandhalter (70) aufweisen, welche verschiedene Widerstände aufweisen um die Spannungsabfälle über dieselben zu variieren.

12: Vorrichtung zur elektrolytischen Behandlung (1) nach Anspruch 1, **dadurch gekennzeichnet daß** die genannte Spannungsquelle (3) einen Umpolschalter (71, 72) aufweist, die periodisch die Polarität des genannten zentral angeordneten Elements (3) und der genannten inneren (17) und äußeren (23) Rohre umkehrt.

13: Vorrichtung zur elektrolytischen Behandlung (1) nach Anspruch 1, **dadurch gekennzeichnet daß** innerhalb des genannten langgestreckten Elements (3) und des genannten inneren (17) und äußeren (23) Rohres Substanzen zur Erhöhung ihres Reaktionsbereichs vorhanden sind.

14: Vorrichtung zur elektrolytischen Behandlung (1) nach Anspruch 1, beinhaltend genannte Flüssigkeiten, **gekennzeichnet durch** die Hinzugabe von Substanzen zu den genannten Flüssigkeiten zur Vergrößerung der Metall-Ionen-Konzentration zum Zwecke der Erhöhung der Wirksamkeit der genannten Vorrichtung zur elektrolytischen Behandlung (1).

15: Vorrichtung zur elektrolytischen Behandlung (1) nach Anspruch 1, **dadurch gekennzeichnet daß** das zentral angeordnete langgestreckte Element (3) einen Behandlungsstoff enthält.

16: Vorrichtung zur elektrolytischen Behandlung (1) nach Anspruch 1, **dadurch gekennzeichnet daß** das innere Rohr (17) einen Behandlungsstoff enthält.

17: Vorrichtung zur elektrolytischen Behandlung (1) nach Anspruch 1, **dadurch gekennzeichnet daß** das äußere Rohr (23) einen Behandlungsstoff enthält.

18: Vorrichtung zur elektrolytischen Behandlung (1) nach Anspruch 1, beinhaltend genannte Flüssigkeiten, **gekennzeichnet durch** Hinzufügung von mindestens einer Substanz zu den genannten Flüssigkeiten zur Veränderung der Beschaffenheit des Schlammes oder gebildeter Ausfällungen.

19: Vorrichtung zur elektrolytischen Behandlung (1) nach Anspruch 1, beinhaltend genannte Flüssigkeiten, **gekennzeichnet durch** Hinzufügung von mindestens einer Substanz zu den genannten Flüssigkeiten zur Verbesserung des Entfernens von Verunreinigungon aus den genannten Flüssigkeiten.

20: Vorrichtung zur elektrolytischen Behandlung (1) nach Anspruch 1, beinhaltend genannte Flüssigkeiten, **gekennzeichnet durch** Hinzufügung von mindestens einer Substanz zu den genannten Flüssigkeiten zur Bildung von ungefährlichem Schlamm oder Ausfällungen.

21: Verfahren zur Reinigung wäßriger Lösungen in einer Vorrichtung mit zentral verlängertem Element (3), einem inneren Isolator (15), der um das genannte zentral angeordnete verlängerte Element (3) herumgewickelt ist, einem inneren Rohr (17), welches den genannten inneren Isolator (15) umschließt, einem äußeren Isolator (19), der um das genannte innere Rohr (17) herumgewickelt ist, einem äußeren Rohr (23), welches den genannten äußeren Isolator (19) umschließt, einem Gehäuse mit Einlaß- (11) und Auslaßteilen (36 , und mit einer Spannungsquelle (35) mit Klemmen, **dadurch gekennzeichnet daß** das genannte Verfahren die genannte wäßrige Lösung am genannten inneren Isolator (15) entlangführt, so daß die genannte wäßrige Lösung Berührung hat mit dem genannten zentral angeordneten verlängerten Element (3) and dem genannten inneren Rohr (17); daß die genannte wäßrige Lösung entlang dem genannten äußeren Isolator (19) geführt wird, so daß die genannte wäßrige Lösung mit dem genannten inneren Rohr (17) und dem genannten äußeren Rohr (23) in Berührung gelangt; daß eine Klemme der genannten Spannungsquelle (35) mit dem genannten zentralen langgestreckten Element (3) und dem genannten äußeren Rohr (23) verbunden wird; daß die andere Klemme der genannten Spannungsquelle (35) mit dem genannten inneren Rohr (17) verbunden wird und die genannte Spannungsquelle (35) eine Spannung über das genannte zentrale langgestreckte Element (3) und das genannte innere (17) und äußere Rohr (23) anlegt, wobei die genannte Spannungsquelle (35) schwebende Materialien und gelöste Feststoffe aus der genannten wäßrigen Lösung entfernt.

22: Verfahren zur Reinigung wäßriger Lösungen nach Anspruch 21, **dadurch gekennzeichnet daß** das zentral angeordnete langgestreckte Element (3) und das genannte äußere Rohr (23) aus Metallen hergestellt sind, welche als Anode wirken, und daß das genannte innere Rohr (17) aus einem Metall hergestellt ist, welches als Kathode wirkt.

23: Verfahren zur Reinigung wäßriger Lösungen nach Anspruch 21, **dadurch gekennzeichnet daß** das genannte zentral angeordnete langgestreckte Element (3) und das genannte äußere Rohr (23) aus Metallen hergestellt sind, welche als Kathode wirken, und daß das genannte innere Rohr (17) aus einem Metall hergestellt ist, welches als Anode wirkt.

24: Verfahren zur Reinigung wäßriger Lösungen nach Anspruch 21, **dadurch gekennzeichnet daß** das genannte zentral angeordnete langgestreckte Element (3) eine massive Stange ist.

25: Verfahren zur Reinigung wäßriger Lösungen nach Anspruch 21, **dadurch gekennzeichnet daß** das genannte zentral angeordnete langgestreckte Element (3) als innerstes Rohr ausgeführt ist.

26: Verfahren zur Reinigung wäßriger Lösungen nach Anspruch 21, **dadurch gekennzeichnet daß** die von der Spannungsquelle (35) gelieferte Spannung variiert.

27: Verfahren zur Reinigung wäßriger Lösungen nach Anspruch 21, **dadurch gekennzeichnet daß** die Polarität über den Klemmen der genannten Spannungsquelle (35) umkehrbar ist.

28: Verfahren zur Reinigung wäßriger Lösungen nach Anspruch 21, **dadurch gekennzeichnet daß** der aus den genannten wäßrigen Lösungen gewonnene Schlamm wiederverwertet wird.

29: Verfahren zur Reinigung wäßriger Lösungen nach Anspruch 28, **dadurch gekennzeichnet daß** durch Recycling des genannten Schlammes Kernbildungskeime in die genannten wäßrigen Lösungen eingebracht werden.

30: Verfahren zur Reinigung wäßriger Lösungen nach Anspruch 21, **gekennzeichnet durch** ein Vorbeiführen der genannten wäßrigen Lösungen an Materialien innerhalb der genannten inneren (17) und äußeren Rohre (23), so daß der Reaktivitätsbereich der genannten Rohre wirkungsvoll erweitert wird.

31: Verfahren zur Reinigung wäßriger Lösungen nach Anspruch 21, **dadurch gekennzeichnet daß** mindestens eine Substanz der genannten wäßrigen Lösung zugegeben wird um die Metall-Ionen-Konzentration zu vergrößern um dadurch die Entfernung von Verunreinigungen aus den genannten wäßrigen Lösungen zu verbessern.

32: Verfahren zur Reinigung wäßriger Lösungen nach Anspruch 21, **dadurch gekennzeichnet daß** das genannte zentral angeordnete langgestreckte Element (3) eine Behandlungsmaterial enthaltende massive Stange ist.

33: Verfahren zur Reinigung wäßriger Lösungen nach Anspruch 21, **dadurch gekennzeichnet daß** das genannte zentral angeordnete langgestreckte Element (3) ein Behandlungsmaterial enthaltendes innerstes Rohr ist.

34: Verfahren zur Reinigung wäßriger Lösungen nach Anspruch 21, **dadurch gekennzeichnet daß** das genannte innere Rohr ein Behandlungsmaterial enthält.

35: Verfahren zur Reinigung wäßriger Lösungen nach Anspruch 21, **dadurch gekennzeichnet daß** mindestens eine Substanz der genannten wäßrigen Lösung zugegeben ist, und daß die genannte(n) Substanz(en) ausgewählt ist/sind zum Zwecke der Veränderung derelektrischen Eigenschaften, Säurehaltigkeit, physikalischen Dichte, Bildung oder Nukleation, or Lösung von Ionen vom Schlamm oder von den Ausfällungen.

36: Verfahren zur Reinigung wäßriger Lösungen nach Anspruch 21, **dadurch gekennzeichnet daß** mindestens eine Substanz, die zur Verbesserung der Entfernung von Verunreinigungen von den genannten Flüssigkeiten ausgewählt ist, den wäßrigen Lösungen zugegeben wird.

37: Verfahren zur Reinigung wäßriger Lösungen nach Anspruch 21, **dadurch gekennzeichnet daß** mindestens eine Substanz zur Bildung von ungefährlichem Schlamm oder Ausfällungen den genannten wäßrigen Lösungen beigeben wird.

38: Verfahren zur Reinigung wäßriger Lösungen nach Anspruch 21, **dadurch gekennzeichnet daß** mindestens eine Substanz der folgenden Gruppe den genannten wäßrigen Lösungen beigegeben wird: Säure, Lauge, Polymer, Flugasche, Moor, Ozon, Potassium Permangonat, Alum, Eisenchlorid, Eisenhydroxyd, Kalziumchlorid, Silikon, Magnesia Salze, Eisenoxyd, Alumina, Luft, Oxygen.

## Revendications

1. Appareil (1) pour le traitement électrolytique de liquides ayant une source de tension (35) et un boîtier avec des sections d'entrée (11) et de sortie (36), *caractérisé en ce que* ledit boîtier renferme des tubes interne (17) et externe (23), des isolateurs interne (15) et externe (19) et un élément longitudinal (3) positionné de manière centrale, en ce que ledit isolateur interne (15) s'enroule autour dudit élément longitudinal (3) positionné de manière centrale, ledit tube interne (17) entoure ledit isolateur interne (15), ledit isolateur externe (19) s'enroule autour dudit tube interne (17), ledit tube externe (23) entoure ledit isolateur externe (19), et en ce que ladite source de tension (35) connecte une borne audit élément longitudinal (3) positionné de manière centrale et audit tube externe (23), et connecte une seconde borne audit tube interne (17).

2. Appareil (1) de traitement électrolytique selon la Revendication 1, *caractérisé en ce que* ledit élément (3) positionné de manière centrale est plein.

3. Appareil (1) de traitement électrolytique selon la Revendication 1, *caractérisé en ce que* ledit élément (3) positionné de manière centrale est tubulaire.

4. Appareil (1) de traitement électrolytique selon la Revendication 2, *caractérisé en ce que* ledit élément tubulaire (3) positionné de manière centrale possède une pluralité d'ouvertures (58) le traversant.

5. Appareil (1) de traitement électrolytique selon la Revendication 1, *caractérisé en ce que* ledit élément (3) positionné de manière centrale et ledit tube externe (23) sont réalisés dans des matériaux qui font office d'anodes, et dans lequel ledit tube interne (17) est réalisé dans un matériau qui fait office de cathode.

6. Appareil (1) de traitement électrolytique selon la Revendication 1, *caractérisé en ce que* ledit élément (3) positionné de manière centrale et ledit tube externe (23) sont réalisés dans des matériaux qui font office de cathodes, et dans lequel ledit tube interne (17) est réalisé dans un matériau qui fait office d'anode.

7. Appareil (1) de traitement électrolytique selon la Revendication 1, *caractérisé en ce que* ledit élément (3) positionné de manière centrale est réalisé dans un matériau qui fait office de cathode, et ledit tube interne (17) et ledit tube externe (23) sont réalisés dans des matériaux qui font office d'anodes.

8. Appareil (1) de traitement électrolytique selon la Revendication 1, *caractérisé en ce que* ledit élément (3) positionné de manière centrale est réalisé dans un matériau qui fait office d'anode, et ledit tube interne (17) et ledit tube externe (23) sont réalisés dans des matériaux qui font office de cathodes.

9. Appareil (1) de traitement électrolytique selon la Revendication 1, *caractérisé en ce que* ledit élément (3) positionné de manière centrale et ledit tube interne (17) sont réalisés dans des matériaux qui font office d'anodes, et dans lequel ledit tube externe (23) est réalisé dans un matériau qui fait office de cathode.

10. Appareil (1) de traitement électrolytique selon la Revendication 1, *caractérisé en ce que* ledit élément (3) positionné de manière centrale et ledit tube interne (17) sont réalisés dans des matériaux qui font office de cathodes, et dans lequel ledit tube externe (23) est réalisé dans un matériau qui fait office d'anode.

11. Appareil (1) de traitement électrolytique selon la Revendication 1, *caractérisé en ce que* ledit élément longitudinal (3) positionné de manière centrale et lesdits tubes interne (17) et externe (23) ont des isolateurs (70) ayant des résistances différentes pour faire varier les chutes de potentiel transversalement.

12. Appareil (1) de traitement électrolytique selon la Revendication 1, *caractérisé en ce que* ladite source de tension (35) possède des commutateurs (71, 72) d'inversion de la polarité qui inversent périodiquement la polarité dudit élément longitudinal (3) positionné de manière centrale et desdits tubes interne (17) et externe (23).

13. Appareil (1) de traitement électrolytique selon la Revendication 1, *caractérisé en ce que* des substances se trouvent à l'intérieur dudit élément longitudinal (3) et desdits tubes interne (17) et externe (23) pour accroître l'aire de réactivité de ceux-ci.

14. Appareil (1) de traitement électrolytique selon la Revendication 1 contenant lesdits liquides, *caractérisé en ce que* des substances sont ajoutées auxdits liquides pour accroître la conconcentration en ions métalliques afin d'accroître l'efficacité dudit appareil (1) de traitement électrolytique.

15. Appareil (1) de traitement électrolytique selon la Revendication 1, *caractérisé en ce que* ledit élément longitudinal (3) positionné de manière centrale renferme un matériau de traitement.

16. Appareil (1) de traitement électrolytique selon la Revendication 1, *caractérisé en ce que* ledit tube interne (17) renferme un matériau de traitement.

17. Appareil (1) de traitement électrolytique selon la Revendication 1, *caractérisé en ce que* ledit tube externe (23) renferme un matériau de traitement.

18. Appareil (1) de traitement électrolytique selon la Revendication 1 contenant lesdits liquides, *caractérisé en ce qu'*au moins une substance est ajoutée auxdits liquides pour changer la nature de la boue ou du précipité formé.

19. Appareil (1) de traitement électrolytique selon la Revendication 1 contenant lesdits liquides, *caractérisé en ce qu'*au moins une substance est ajoutée auxdits liquides pour améliorer l'élimination des impuretés desdits liquides.

20. Appareil (1) de traitement électrolytique selon la Revendication 1 contenant lesdits liquides, *caractérisé en ce qu'*au moins une substance est ajoutée auxdits liquides pour former des boues ou un précipité non dangeureux.

21. Procédé de purification de solutions aqueuses dans un appareil possédant un élément longitudinal (3) positionné de manière centrale, un isolateur interne (15) qui est enroulé autour dudit élément longitudinal (3) positionné de manière centrale, un tube interne (17) qui renferme ledit isolateur interne (15), un isolateur externe (19) qui est enroulé autour dudit tube interne (17), et un tube externe (23) qui renferme ledit isolateur externe (19), un boîtier ayant des sections d'entrée (11) et de sortie (36), et une source de tension (35) munie de bornes, *caractérisé en ce que* ledit procédé fait circuler ladite solution aqueuse le long dudit isolateur interne (15) afin que ladite solution aqueuse soit en contact avec ledit élément longitudinal (3) positionné de manière centrale et avec ledit tube interne (17), fait circuler ladite solution aqueuse le long dudit isolateur externe (19) afin que ladite solution aqueuse soit en contact avec ledit tube interne (17) et ledit tube externe (23), connecte une autre borne de ladite source de tension (35) audit tube interne (17), et ladite source de tension (35) applique une tension en travers dudit élément longitudinal (3) positionné de manière centrale et lesdits tubes interne (17) et externe (23) avec ladite source de tension (35) afin d'éliminer de ladite solution les matières en suspension et les solides dissous.

22. Procédé de purification de solutions aqueuses selon la Revendication 21, *caractérisé en ce que* ledit élément longitudinal (3) positionné de manière centrale et ledit tube externe (23) sont réalisés en métaux qui font office d'anodes, et ledit tube interne (17) est réalisé en métal qui fait office de cathode.

23. Procédé de purification de solutions aqueuses selon la Revendication 21, *caractérisé en ce que* ledit élément longitudinal (3) positionné de manière centrale et ledit tube externe (23) sont réalisés en métaux qui font office de cathodes, et ledit tube interne (17) est réalisé en métal qui fait office d'anode.

24. Procédé de purification de solutions aqueuses selon la Revendication 21, *caractérisé en ce que* ledit élément longitudinal (3) positionné de manière centrale est une barre pleine.

25. Procédé de purification de solutions aqueuses selon la Revendication 21, *caractérisé en ce que* ledit élément longitudinal (3) positionné de manière centrale est un tube situé le plus au coeur.

26. Procédé de purification de solutions aqueuses selon la Revendication 21, *caractérisé en ce que* la tension fournie par ladite source de tension (35) varie.

27. Procédé de purification de solutions aqueuses selon la Revendication 21, *caractérisé en ce que* la polarité aux bornes de ladite source de tension (35) peut être inversée.

28. Procédé de purification de solutions aqueuses selon la Revendication 21, *caractérisé en ce que* la boue formée par lesdites solutions aqueuses est recyclée.

29. Procédé de purification de solutions aqueuses selon la Revendication 28, *caractérisé en ce que* du germe cristallin est introduit dans lesdites solutions aqueuses lors du recyclage de ladite boue.

30. Procédé de purification de solutions aqueuses selon la Revendication 21, *caractérisé en ce qu'*on fait circuler lesdites solutions aqueuses sur des matériaux situés à l'intérieur desdits tubes interne (17) et externe (23) de telle façon que l'aire de réactivité desdits tubes soit augmentée utilement.

31. Procédé de purification de solutions aqueuses selon la Revendication 21, *caractérisé en ce qu'*au moins une substance est ajoutée auxdites solutions aqueuses pour accroître la concentration en ions métalliques afin d'améliorer l'élimination des impuretés desdites solutions aqueuses.

32. Procédé de purification de solutions aqueuses selon la Revendication 21, *caractérisé en ce que* ledit élément longitudinal (3) positionné de manière centrale est une barre pleine qui renferme un matériau de traitement.

33. Procédé de purification de solutions aqueuses selon la Revendication 21, *caractérisé en ce que* ledit élément longitudinal (3) positionné de manière centrale est un tube situé le plus au coeur qui renferme un matériau de traitement.

34. Procédé de purification de solutions aqueuses selon la Revendication 21, *caractérisé en ce que* ledit tube interne renferme un matériau de traitement.

35. Procédé de purification de solutions aqueuses selon la Revendication 21, *caractérisé en ce qu'*au moins une substance est ajoutée auxdites solutions aqueuses, la(les)dite(s) susbtance(s) étant choise(s) pour changer les caractéristiques électriques, l'acidité, la densité physique, la formation ou la nucléation, ou pour le dégagement d'ions de la boue ou du précipité formé.

36. Procédé de purification de solutions aqueuses selon la Revendication 21, *caractérisé en ce qu'*au moins une substance choisie pour améliorer l'élimination des impuretées desdits liquides est ajoutée auxdites solutions aqueuses.

37. Procédé de purification de solutions aqueuses selon la Revendication 21, *caractérisé en ce qu'*au moins une substance est ajoutée auxdites solutions aqueuses, la(les)dite(s) susbtance(s) étant choisie(s) pour former des boues ou un précipité non dangeureux.

38. Procédé de purification de solutions aqueuses selon la Revendication 21, *caractérisé en ce qu'*au moins une substance choisie parmi le groupe qui suit est ajoutée auxdites solutions aqueuses : acides, bases, polymères, suies, mousses de tourbe, ozone, permanganate de potassium, alun, chlorure de fer, hydroxide de fer, chlorure de calcium, silice, sels de magnésium, oxyde de fer, alumine, air, oxygène.

FILTRATE AT
GROUND POTENTIAL

FILTER OR
SETTLING
TANK

CLARIFIED
EFFLUENT

DC VOLTAGE
SOURCE

FIG. 1

FIG. 2

FIG. 3

FIG. 4

EP 0 394 232 B1

FILTRATE AT
GROUND POTENTIAL

FILTER OR
SETTLING
TANK

CLARIFIED
EFFLUENT

DC VOLTAGE
SOURCE

FIG. 5

EP 0 394 232 B1